(19) Europäisches Patentamt
European Patent Office
Office européen des brevets

(11) **EP 3 008 458 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(21) Anmeldenummer: **14771820.9**

(22) Anmeldetag: **11.09.2014**

(51) Int Cl.:
***G01N 25/72*** *(2006.01)*

(86) Internationale Anmeldenummer:
**PCT/EP2014/069345**

(87) Internationale Veröffentlichungsnummer:
**WO 2015/043963 (02.04.2015 Gazette 2015/13)**

(54) **VERFAHREN ZUR INDUKTIONSTHERMOGRAPHIE**

INDUCTION THERMOGRAPHY METHOD

PROCÉDÉ DE THERMOGRAPHIE PAR INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2013 DE 102013219311**

(43) Veröffentlichungstag der Anmeldung:
**20.04.2016 Patentblatt 2016/16**

(73) Patentinhaber: **Siemens Aktiengesellschaft 80333 München (DE)**

(72) Erfinder:
• **BIENKOWSKI, Lukasz Adam**
**81739 München (DE)**
• **GOLDAMMER, Matthias**
**80687 München (DE)**
• **HOMMA, Christian**
**85551 Kirchheim b. München (DE)**
• **ROTHENFUSSER, Max**
**81377 München (DE)**

(56) Entgegenhaltungen:
• **M Moderhak: "Fourier based stabilisation of thermal images in dynamic thermography", 10th International Conference on Quantitative InfraRed Thermography, 30. Juli 2010 (2010-07-30), XP55148288, Gefunden im Internet: URL:http://www.ndt.net/article/qirt2010/pa pers/qirt2010-093.pdf [gefunden am 2014-10-22]**
• **R Montanini ET AL: "Ultrasound lock-in thermography as a quantitative technique for quality control assessment of cast iron turbocharger components", 10th International Conference on Quantitative InfraRed Thermography, 30. Juli 2010 (2010-07-30), XP55148297, Gefunden im Internet: URL:http://qirt.gel.ulaval.ca/archives/qir t2010/papers/QIRT 2010-097.pdf [gefunden am 2014-10-22]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 008 458 B1

**Beschreibung**

Die Erfindung betrifft ein Verfahren zur Induktionsthermographie.

Zur Prüfung von Werkstücken oder Bauteilen kann als Prüfmethode die Induktionsthermographie verwendet werden. Hierbei wird ein Temperaturverlauf, beispielsweise auf einer Oberfläche des zu prüfenden Objektes, mit einer Infrarotkamera in einer Mehrzahl von Abbildern erfasst. Generell wird zwischen einer aktiven (mit Anregung) und passiven (ohne Anregung) Thermographie unterschieden. Hierbei stellt die Induktionsthermographie eine aktive Methode dar.

Bei der Induktionsthermographie wird mittels einer Spule bzw. eines Induktors ein Induktionsstrom im zu prüfenden Objekt erzeugt. Dies führt durch ohmsche Verluste zu einer Erwärmung des Objektes, so dass aus einer resultierenden Wärmeverteilung auf der Oberfläche des Objektes mittels der Infrarotkamera ein Thermoprofil detektiert werden kann. Weist das zu prüfende Objekt Fehlstellen, insbesondere Risse auf, so muss der induzierte Strom um diese herum oder über einzelne Berührstellen der Rissflanken fließen. Dadurch wird eine lokale Stromdichte und somit durch ohmschen Verluste eine Erwärmung an den Fehlstellen, beispielsweise an den Rissen, erhöht. Im Infrarotbild ist diese erhöhte Erwärmung der Fehlstellen erkennbar.

Zur Prüfung des Objektes ist es notwendig, die Spule besonders nah an das Objekt heranzuführen, da der induzierte Strom bevorzugt in der Nähe der Spule fließt. Dadurch kann aber nur eine lokale Prüfung in einem bestimmten Bereich des Objektes erfolgen. Soll das ganze Objekt oder ein weiträumiger Bereich des Objektes untersucht werden, muss die Messung mehrmals, das heißt aus verschiedenen Aufnahmerichtungen mit einer entsprechenden Verschiebung der Spule, wiederholt werden. Nach dem Stand der Technik wird für jede einzelne Messung die Mehrzahl der Abbilder einer mathematischen Analyse unterzogen, die für jede Messung ein Ergebnisabbild liefert. Typischerweise werden je nach Größe des prüfenden Objektes in etwa 80 Abbilder (Ergebnisabbilder) erzeugt, die durch einen Prüfer einzeln betrachtet und analysiert werden müssen. Durch die gegebene einzelne Betrachtung durch den Prüfer wird die Fehlererkennbarkeit beeinträchtigt, da typischerweise jeweils nur ein kleiner Ausschnitt des thermographischen Abbildes wesentliche Informationen enthält, während das restliche Abbild bedingt durch die Analyse stark verrauscht ist, oder kein Signal und damit keine Information zeigt. Überdies können einzelne Fehlstellen durchaus in Abbildern mehrerer Messungen sichtbar sein, was zu einer ineffizienten Mehrfachbewertung derselben Fehlstelle führen kann. Dabei ist bekannt, zur Bewertung die Fouriertransformierten der Ergebnisbilder zu betrachten, etwa in Montanini R, et *al.:* Ultrasound lock-in thermography as a quantitative technique for quality control assessment of cast iron turbocharger components, 10th International Conference on Quantitative InfraRed Thermography, Quebec oder der Druckschrift DE 10 2012 222 933 A1.

Der vorliegenden Erfindung liegt folglich die Aufgabe zugrunde, die Nachteile des Standes der Technik zu vermeiden und ein Verfahren anzugeben, das eine gegenüber dem Stand der Technik verbesserte Fehlererkennung von zu prüfenden Objekten ermöglicht.

Die Aufgabe wird durch ein Verfahren mit den Merkmalen des unabhängigen Anspruches gelöst. In den abhängigen Ansprüchen sind vorteilhafte Ausgestaltungen und Weiterbildungen der Erfindung angegeben.

Bei dem erfindungsgemäßen Verfahren zur aktiven Induktionsthermographie wird mittels einer Kamera für eine Mehrzahl von Aufnahmerichtungen jeweils eine Mehrzahl von Abbildern eines zu vermessenden Objektes aufgenommen. Hierbei werden für jede einzelne Aufnahmerichtung, d.h. für jede einzelne Messung, die Schritte:

Ableiten eines komplexwertigen fouriertransformierten Abbildes aus den einzelnen Abbildern;

Bestimmung eines mittleren Phasenwerts aus dem fouriertransformierten Abbild;

durchgeführt. Aus dem bestimmten mittleren Phasenwert und dem fouriertransformierten Abbild für jede Aufnahmerichtung wird ein phasenkorrigiertes fouriertransformiertes Abbild abgeleitet, so dass die phasenkorrigierten fouriertransformierten Abbilder nun einen im Wesentlichen gleichen mittleren Phasenwert aufweisen. Die phasenkorrigierten fouriertransformierten Abbilder der einzelnen Aufnahmerichtungen werden dann zu einem kombinierten fouriertransformierten Abbild zusammengesetzt.

Durch das erfindungsgemäße Verfahren wird vorteilhafterweise aus der Vielzahl der Abbildern ein geeignetes Abbild abgeleitet, dass der Prüfung des Objektes zugrunde gelegt werden soll. Dadurch muss ein Prüfer lediglich dieses abgeleitete phasenkorrigierte fouriertransformierte kombinierte Abbild betrachten. Dies erleichtert die Fehlerkorrektur deutlich.

Das erfindungsgemäße Verfahren lässt sich mit anderen Worten folgendermaßen beschreiben:

Jeweils für eine Aufnahmerichtung der Kamera wird eine Mehrzahl von Abbildern des zu prüfenden Objektes gewonnen. Aus diesen Abbildern wird ein fouriertransformiertes Abbild für jede Aufnahmerichtung abgeleitet.

Zur Durchführung der Fouriertransformation werden beispielsweise die Abbilder als eine Matrix $A_{mn}(i,j)$ mit reellwertigen Einträgen aufgefasst. Hierbei entspricht m der m-ten Aufnahmerichtung bzw. Messung, *n* dem n-ten Abbild aus der m-ten Aufnahmerichtung und die Indizies *i,j* benennen die Bildpunkte des zweidimensionalen Abbildes. Das fouriertransformierte Abbild $F_m(i,j)$ wird dann beispielsweise durch den funktionalen Zusammenhang

$$F_m(i,j) = \sum_{n=1}^{N} A_{mn}(i,j) e^{2\pi i \frac{(n-1)}{N}},$$ abgeleitet,

wobei *N* die Gesamtanzahl der Abbilder in der jeweiligen Aufnahmerichtung benennt. Es genügt somit nur eine Frequenz der Fouriertransformation zu betrachten. Gemäß dem genannten funktionalen Zusammenhang wird hier die Grundfrequenz verwendet. Generell können aber auch andere Frequenzen in Betracht gezogen werden.

Durch die komplexwertige Fouriertransformation besitzen die fouriertransformierten Abbilder $F_m(i,j)$ der Aufnahmerichtungen pro Bildpunkt (*i,j*) einen Amplituden- und Phasenwert. Aus der Vielzahl dieser Phasenwerte eines fouriertransformierten Abbildes für eine Aufnahmerichtung, wird ein mittlerer Phasenwert $\varphi_m$ bestimmt. Der mittlere Phasenwert ist hierbei als ein Wert zu verstehen, der repräsentativ für die Vielzahl der Phasenwerte ist. Zur Bestimmung des mittleren Phasenwerts kann generell eine Vielzahl von Verfahren herangezogen werden. Hierbei kann die Wahl des Verfahrens vom Einzelfall abhängen.

In einem weiteren Schritt werden die fouriertransformierten Abbilder jeder Aufnahmerichtung mittels des jeweiligen mittleren Phasenwertes phasenkorrigiert. Darunter ist zu verstehen, dass für jede Aufnahmerichtung die Phasenwerte aller Bildpunkte des fouriertransformierten Abbildes so transformiert werden, dass ein aus den phasenkorrigierten fouriertransformierten Abbildern erneut abgeleiteter mittlerer Phasenwert für jede Aufnahmerichtung im Wesentlichen den selben numerischen Wert aufweist.

Beispielsweise kann für jede Aufnahmerichtung die Differenz $\Delta\varphi_m$ des mittleren Phasenwertes zum Phasenwert $\pi/2$ ermittelt werden. Werden nun alle Phasenwerte der fouriertransformierten Abbilder aller Aufnahmerichtungen *m* gemäß der Relation $F_{m,korrigiert}(i,j) = F_m(i,j)e^{j\Delta\varphi_m}$ phasenkorrigiert, so weisen die phasenkorrigierten fouriertransformierten Abbilder $F_{m,korrigiert}(i,j)$ jeweils einen mittleren Phasenwert von $\pi/2$ auf. Dadurch sind die Phasen der fouriertransformierten Abbilder der Aufnahmerichtungen aufeinander abgestimmt. Nun wird in einem weiteren Schritt des erfindungsgemäßen Verfahrens aus den einzelnen phasenkorrigierten Abbildern der einzelnen Aufnahmerichtungen ein kombiniertes phasenkorrigiertes fouriertransformiertes Abbild des zu prüfenden Objektes abgeleitet. Beispielsweise lässt sich eine numerische Summe

$$F(i,j) = \sum_{m=1}^{M} F_{m,korrigiert}(i,j)$$ der

phasenkorrigierten Abbilder der Aufnahmerichtungen bilden. Hierbei bezeichnet *M* die Gesamtanzahl der Aufnahmerichtungen. Vorteilhafterweise sind vor Bildung der Summe, also vor der Bildung des kombinierten fouriertransformierten Abbildes $F(i,j)$, die Phasen der einzelnen zur Summe beitragenden Abbilder korrigiert und aneinander angepasst worden. Dadurch werden Fehler, die bei einem Zusammensetzen der einzelnen Abbilder zu einem kombinierten Abbild entstehen, erfindungsgemäß signifikant reduziert. Die kohärente, das heißt die phasentreue Überlagerung der einzelnen Abbilder zu einem kombinierten Abbild des zu prüfenden Objektes, erhöht zudem das Signalrauschverhältnis der Prüfung. Generell weist das kombinierte fouriertransformierte Abbild $F(i,j)$ sowohl Amplituden- als auch Phasenwerte auf, aus denen ein kombiniertes Amplituden- und Phasenabbild abgeleitet werden kann. Es zeigt sich, dass besonders das kombinierte Phasenabbild für die Beurteilung eines zu prüfenden Objektes von Vorteil ist.

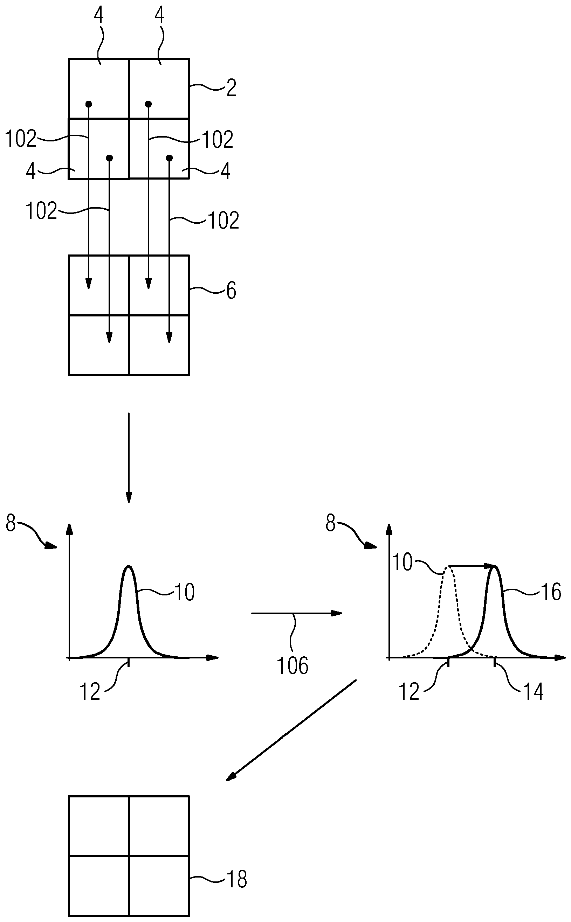

Überdies ergibt sich bei dem erfindungsgemäßen Verfahren der Vorteil, dass ein Prüfer nur ein einziges Abbild, nämlich das kombinierte fouriertransformierte und phasenkorrigierte Abbild $F(i,j)$ des zu prüfenden Objektes, zur Einschätzung von Fehlstellen betrachten muss. Durch das erfindungsgemäße Verfahren werden somit vorteilhafterweise die nach dem Stand der Technik üblichen 20 bis 80 Abbilder zu einem einzigen Abbild verschmolzen bzw. kombiniert. Wird überdies der Induktor zur Erwärmung des prüfenden Objektes bei den verschiedenen Messungen aus den verschiedenen Aufnahmerichtungen gedreht und/oder verdreht, so ergibt sich der Vorteil einer besseren Erkennbarkeit von Fehlstellen, insbesondere von linienartigen Rissen, die sensitiv auf unterschiedliche Stromrichtungen reagieren.

Gemäß einer vorteilhaften Ausgestaltung der Erfindung wird für jede Aufnahmerichtung eine Häufigkeitsverteilung der in den fouriertransformierten Abbildern vorhandenen Phasenwerte zur Ableitung des jeweiligen mittleren Phasenwertes verwendet. Für jede Aufnahmerichtung wird eine Mehrzahl von Abbildern aufgenommen. Durch die Fouriertransformation, die diese Mehrzahl von Abbildern zu einem fouriertransformierten und komplexwertigen Abbild zusammenführt, wird für jeden Bildpunkt des zusammengeführten fouriertransformierten Abbildes ein Amplituden- und Phasenwert abgeleitet. Mit anderen Worten, jeder Bildpunkt des Abbildes weist insbesondere einen Phasenwert auf. Wird eine Häufigkeitsverteilung der Phasenwerte eines fouriertransformierten Abbildes ermittelt, so kann aus dieser der mittlere Phasenwert abgeleitet werden. Der mittlere Phasenwert ist dann repräsentativ für die im fouriertransformierten Abbild auftretenden Phasenwerte.

Gemäß einer weiteren vorteilhaften Ausgestaltung wird ein häufigster Phasenwert aus der Häufigkeitsverteilung abgeleitet. Dadurch entspricht der mittlere Phasenwert dem Phasenwert, der gemäß der Häufigkeitsverteilung gehäuft im fouriertransformierten Abbild vorkommt. Der mittlere Phasenwert wird dann für die Phasenkorrektur des fouriertransformierten Abbildes verendet. Beispielsweise wird für jede Messung aus jeder Aufnahmerichtung die Phasendifferenz zwischen diesem häufigsten Phasenwert und einem festen Phasenwert, insbesondere $\pi/2$, ermittelt.

In einer vorteilhaften Weiterbildung wird ein Schwerpunkt der Häufigkeitsverteilung ermittelt. Dadurch kann vorteilhafterweise der mittlere Phasenwert als Schwerpunkt beziehungsweise als Phasenschwerpunkt der Häufigkeitsverteilung festgelegt werden. Durch die Ermittlung des Schwerpunktes geht vorteilhafterweise auch die Form der Häufigkeitsverteilung ein, so dass dadurch die Erkennung von Fehlstellen erhöht wird.

Gemäß einer vorteilhaften Ausgestaltung der Erfindung werden die Häufigkeitsverteilungen durch einen Savitzky-Golay-Filter gefiltert. Dadurch wird vorteilhafterweise ein Rauschen in der Häufigkeitsverteilungen bzw. im Histogramm unterdrückt. Dies erleichter die Ableitung des häufigsten Phasenwertes und/oder des Phasenschwerpunktes des Histogramms oder einer sonstigen Größe aus der Häufigkeitsverteilung. Beispielsweise kann auch die Ableitung höherer Momente der Häufigkeitsverteilung von Vorteil sein.

Gemäß einer weiteren vorteilhaften Ausgestaltung wird zur Ableitung des kombinierten fouriertransformierten Abbildes die numerische Summe der phasenkorrigierten fouriertransformierten Abbilder verwendet. Dadurch ist das kombinierte fouriertransformierte Abbild der Mittelwert der phasenkorrigierten fouriertransformierten Abbilder. Ein weiterer numerischer Faktor, der die Summe skaliert, kann vorgesehen sein.

In einer vorteilhaften Weiterbildung der Erfindung werden aus jeder Aufnahmerichtung wenigstens 10 Abbilder aufgenommen. Durch die Aufnahme von einer Mehrzahl von Abbildern aus jeder Aufnahmerichtung, wird eine Erkennung von Fehlstellen signifikant erhöht. Überdies ist eine Aufnahme von einer Mehrzahl von Abbildern von Vorteil, da eine Ausbreitung der Wärme im und/oder auf einer Oberfläche des zu prüfenden Objektes erfasst werden kann. Die wenigstens 10 Abbilder bilden folgend ein Video beziehungsweise einen Film der Wärmeausbreitung. In einer weiteren vorteilhaften Weiterbildung werden in wenigstens einer Aufnahmerichtung die Abbilder in weniger als einer Sekunde aufgenommen. Dadurch wird vorteilhafterweise der zeitliche Verlauf der Wärme bzw. der Wärmeausbreitung in Echtzeit erfasst.

Gemäß einer vorteilhaften Ausgestaltung der Erfindung wird ein kombiniertes Phasen- und/oder Amplitudenabbild aus dem kombinierten komplexwertigen fouriertransformierten Abbild abgeleitet. Generell kann jede komplexe Zahl in einen Amplitudenwert (Amplitude) und einen Phasenwert (Phase) zerlegt werden. Ein kombiniertes fouriertransformierte Abbild wird durch komplexwertige Bildpunkte dargestellt, so dass für jeden Bildpunkt ein Amplituden- und/oder Phasenwert abgeleitet werden kann. Diese abgeleitete Gesamtheit der einzelnen Amplituden- und/oder Phasenwerte bilden dann das kombinierte Amplituden- und/oder Phasenabbild. Von besonderem Vorteil ist das kombinierte Phasenabbild, da im kombinierten Phasenabbild Fehlstellen besonders gut erkannt werden.

Gemäß einer vorteilhaften Ausgestaltung der Erfindung wird wenigstens das kombinierte Phasenabbild auf einem Bildschirm in Echtzeit angezeigt. Dadurch kann der Prüfer in Echtzeit die Prüfung des zu prüfenden Objektes verfolgen. Beispielsweise ist die zeitliche Differenz, die auf Latenzzeiten beruht, kleiner als eine Sekunde. Diese kann durch Softwareoptimierungen, wie beispielsweise Multithreading, erreicht werden.

Die Erfindung wird nachfolgend anhand eines bevorzugten Ausführungsbeispiels unter Bezugnahme auf die angehängte Zeichnung beschrieben, die einen schematischen Ablauf des erfindungsgemäßen Verfahrens zeigt.

Gleichartige Elemente werden in der Zeichnung mit denselben Bezugszeichen versehen.

Die einzige Figur zeigt einen schematischen Ablauf des erfindungsgemäßen Verfahrens für eine Aufnahmerichtung. Aus einer beliebigen Aufnahmerichtung wird ein thermographisches Abbild 2 eines zu prüfenden Objektes gewonnen. Das Abbild 2 weist in diesem Ausführungsbeispiel schlicht vier Bildpunkte 4 auf. Aus einer Mehrzahl von Abbildern 2 wird durch eine Fouriertransformation 102 ein kombiniertes fouriertransformiertes Abbild 6 abgeleitet. Jeder der vier Bildpunkte 4 weist somit im fouriertransformierten Abbild 6 einen Amplituden- und Phasenwert auf. Die Phasenwerte, in diesem Ausführungsbeispiel der Anzahl vier, werden in einem Histogramm 8 aufgetragen und somit eine Häufigkeitsverteilung 10 erstellt. Ein häufigster Phasenwert 12 (mittlerer Phasenwert 12) wird aus der Häufigkeitsverteilung 10 abgeleitet.

Mittels des häufigsten Phasenwerts 12 werden die einzelnen Phasenwerte der Bildpunkte so phasenkorrigiert 106, dass sich eine gegenüber der Häufigkeitsverteilung 10 verschobene Häufigkeitsverteilung 16 ergibt. Hierbei besitzt der häufigste Phasenwert 14 nun den Wert $\pi/2$. Die einzelnen phasenkorrigierten Bildpunkte 4 bilden nun ein phasenkorrigiertes fouriertransformiertes Abbild 18. Dadurch beträgt der phasenkorrigierte mittlere Phasenwert 14 jeder Aufnahmerichtung nun $\pi/2$.

Die phasenkorrigierten fouriertransformierten Abbilder 18 der einzelnen Aufnahmerichtungen werden zu einem kombinierten, phasenkorrigierten fouriertransformierten Abbild durch eine Summenbildung zusammengesetzt. Da die Phasenwerte vor der Bildung der Summe der phasenkorrigierten fouriertransformierten Abbilder korrigiert wurden, das heißt auf einen gleichartigen Phasenwert festgelegt worden sind, ist die Bildung der Summe kohärent und somit werden Fehler, beispielsweise durch eine Verschiebung und/oder Drehung der Kamera verringert. Insbesondere werden Fehler, die durch eine Restwärme von vorhergehenden Messungen entstehen, rechnerisch korrigiert. Fehlstellen werden dadurch signifikant besser erkannt.

## Patentansprüche

**1.** Verfahren zur aktiven Induktionsthermografie, bei dem mittels einer Kamera für eine Mehrzahl von Aufnahmerichtungen jeweils eine Mehrzahl von Abbildern eines zu prüfenden Objektes aufgenommen werden, wobei für jede einzelne Aufnahmerichtung die Schritte:

Ableiten eines komplexwertigen fouriertransformierten Abbildes aus den Abbildern;
Bestimmung eines mittleren Phasenwerts aus dem fouriertransformierten Abbild;
durchgeführt werden,
bei dem ein phasenkorrigiertes fouriertransformiertes Abbild aus dem mittleren Phasenwert und dem fouriertransformierten Abbild für jede Aufnahmerichtung abgeleitet wird, so dass die phasenkorrigierten fouriertransformierten Abbilder nun einen im Wesentlichen gleichen mittleren Phasenwert aufweisen,
und bei dem ein kombiniertes fouriertransformiertes Abbild aus den phasenkorrigierten fouriertransformierten Abbildern abgeleitet wird.

**2.** Verfahren gemäß Anspruch 1, bei dem für jede Aufnahmerichtung eine Häufigkeitsverteilung der im fouriertransformierten Abbild vorhandenen Phasenwerte zur Ableitung des jeweiligen mittleren Phasenwertes verwendet wird.

**3.** Verfahren gemäß Anspruch 2, bei dem jeweils ein häufigster Phasenwert aus den Häufigkeitsverteilungen abgeleitet wird.

**4.** Verfahren gemäß Anspruch 2, bei dem jeweils ein Schwerpunkt der Häufigkeitsverteilungen ermittelt wird.

**5.** Verfahren gemäß einem der Ansprüche 2 bis 4, bei dem die Häufigkeitsverteilungen durch einen Savitzky-Golay-Filter gefiltert werden.

**6.** Verfahren gemäß einem der vorangegangen Ansprüche, bei dem zur Ableitung des kombinierten fouriertransformierten Abbildes die numerische Summe der phasenkorrigierten fouriertransformierten Abbilder verwendet wird.

**7.** Verfahren gemäß einem der vorangegangen Ansprüche, bei dem wenigstens für eine Aufnahmerichtung wenigstens 10 Abbilder aufgenommen werden.

**8.** Verfahren gemäß einem der vorangegangen Ansprüche, bei dem die Abbilder wenigstens einer Aufnahmerichtung in weniger als einer Sekunde aufgenommen werden.

**9.** Verfahren gemäß einem der vorangegangen Ansprüche, bei dem ein kombiniertes Phasen- und/oder Amplitudenabbild aus dem kombinierten fouriertransformierten Abbild abgeleitet wird.

**10.** Verfahren gemäß Anspruch 9, bei dem wenigstens das kombinierte Phasenabbild auf einem Bildschirm in Echtzeit angezeigt wird.

## Claims

**1.** Active induction thermography method, wherein a multiplicity of images of an object to be inspected are respectively acquired by means of a camera for a multiplicity of acquisition directions, wherein the following steps are carried out for each individual acquisition direction:

derivation of a complex-value Fourier-transformed image from the images;
determination of an average phase value from the Fourier-transformed image;
wherein a phase-corrected Fourier-transformed image is derived from the average phase value and the Fourier-transformed image for each acquisition direction, so that the phase-corrected Fourier-transformed images then have an essentially equal average phase value,
and wherein a combined Fourier-transformed image is derived from the phase-corrected Fourier-transformed images.

**2.** Method according to Claim 1, wherein, for each acquisition direction, a frequency distribution of the phase values present in the Fourier-transformed image is used for the derivation of the respective average phase value.

**3.** Method according to Claim 2, wherein a most frequent phase value is respectively derived from the frequency distributions.

**4.** Method according to Claim 2, wherein a centroid of the frequency distributions is respectively determined.

**5.** Method according to one of Claims 2 to 4, wherein the frequency distributions are filtered using a Savitzky-Golay filter.

**6.** Method according to one of the preceding claims, wherein the numerical sum of the phase-corrected Fourier-transformed images is used for the derivation of the combined Fourier-transformed image.

**7.** Method according to one of the preceding claims, wherein at least 10 images are acquired at least for one acquisition direction.

8. Method according to one of the preceding claims, wherein the images of at least one acquisition direction are acquired in less than one second.

9. Method according to one of the preceding claims, wherein a combined phase and/or amplitude image is derived from the combined Fourier-transformed image.

10. Method according to Claim 9, wherein at least the combined phase image is displayed in real time on a play screen.

**Revendications**

1. Procédé de thermographie active par induction, dans lequel on prend, au moyen d'un appareil photographique, pour une pluralité de directions de prise de vue, respectivement une pluralité de reproductions d'un objet à contrôler, en effectuant, pour chaque direction de prise de vue, les stades :

on déduit, des reproductions, une reproduction complexe en transformée de Fourier ;
on détermine une valeur de phase moyenne à partir de la reproduction en transformée de Fourier ;
dans lequel on déduit, pour chaque direction de prise de vue, une reproduction en transformée de Fourier et corrigée en phase de la valeur moyenne de phase et de la reproduction en transformée de Fourier, de manière à ce que les reproductions en transformée de Fourier et corrigées en phase aient alors sensiblement une même valeur de phase moyenne, et dans lequel on déduit une reproduction en transformée de Fourier et combinée des reproductions en transformée de Fourier et corrigées en phase.

2. Procédé suivant la revendication 1, dans lequel, pour chaque direction de prise de vue, on utilise une distribution de fréquences de valeurs de phase présentes dans la reproduction en transformée de Fourier pour déduire la valeur de phase moyenne respective.

3. Procédé suivant la revendication 2, dans lequel on déduit respectivement une valeur de phase la plus fréquente des distributions de fréquence.

4. Procédé suivant la revendication 2, dans lequel on détermine respectivement un centre de gravité des distributions de fréquence.

5. Procédé suivant l'une des revendications 2 à 4, dans lequel on filtre les distributions de fréquence par un filtre Savitzky-Golay.

6. Procédé suivant l'une des revendications précédentes, dans lequel, pour déduire la reproduction en transformée de Fourier combinée, on utilise la somme numérique des reproductions en transformée de Fourier et corrigées en phase.

7. Procédé suivant l'une des revendications précédentes, dans lequel on prend, pour une direction de prise de vue, au moins 10 reproductions.

8. Procédé suivant l'une des revendications précédentes, dans lequel on prend les reproductions d'au moins une direction de prise de vue en moins d'une seconde.

9. Procédé suivant l'une des revendications précédentes, dans lequel on déduit une reproduction en phase et/ou en amplitude combinée de la reproduction en transformée de Fourier et combinée.

10. Procédé suivant la revendication 9, dans lequel on affiche au moins la reproduction de phase combinée sur un écran en temps réel.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012222933 A1